# FASCICULE DE BREVET EUROPEEN

(11) **EP 3 245 708 B1**
(45) Date de publication et mention de la délivrance du brevet: **06.03.2019**
(21) Numéro de dépôt: 15830817.1
(22) Date de dépôt: 21.12.2015
(51) Int. Cl.: H02J 7/00, B60L 11/18

(54) **PROCEDE DE GESTION DE CHARGE DE BATTERIE ELECTROCHIMIQUE**
VERFAHREN ZUR LADUNGSVERWALTUNG EINER BATTERIEZELLE
METHOD FOR CHARGE MANAGEMENT OF AN ELECTROCHEMICAL BATTERY

(30) Priorité: 13.01.2015 FR 1550238
(43) Date de publication de la demande: 22.11.2017
(73) Titulaire: PSA Automobiles SA, 78300 Poissy (FR)
(72) Inventeur: FERNANDES, Luis Philippe, 94500 Champigny Sur Marne (FR); BOISARD, Aurelie, 78720 CERNAY LA VILLE (FR)
(74) Mandataire: Jeannin, Laurent Jean-Pierre
(86) Numéro de dépôt international: PCT/FR2015/053681
(87) Numéro de publication internationale: WO 2016/113483

(56) Documents cités:
- EP-A1- 2 738 909
- FR-A1- 2 983 364
- US-A1- 2011 074 354
- US-A1- 2014 330 463

## Description

La présente invention concerne de manière générale un procédé de gestion de charge de cellules unitaires constituant des batteries connectées équipant un véhicule automobile par exemple.

Le document FR2776139A1 décrit un procédé d'équilibrage des tensions dans une batterie comprenant des cellules unitaires électrochimiques reliées en série. Cependant, ce document ne donne pas de solution pour équilibrer les tensions ou la charge de ces cellules unitaires dans le cas où une pluralité de batteries sont connectées entre elles (en série, en parallèles, ou selon une combinaison mixte : quelques batteries connectées en série, formant des modules reliés entre eux en parallèle). D'autre part, la méthode divulguée par ce document qui prend en compte des tensions moyennes peut ne pas être la plus efficace pour optimiser la durée de vie du système global.

Les documents US2014/0330463 et US2011/0074354 montrent un procédé d'équilibrage de tension dans un système de plusieurs batteries contenant des cellules unitaires, l'équilibrage se faisant d'abord au niveau des cellules au sein d'une batterie, puis entre les batteries au niveau supérieur.

Le document FR2983364 décrit un procédé d'équilibrage au sein d'une batterie comprenant plusieurs branches en parallèle.

Un but de la présente invention est de répondre aux inconvénients des documents de l'art antérieur mentionnés ci-dessus et en particulier, tout d'abord, de proposer un procédé de gestion de charge de cellules unitaires d'une pluralité de batteries connectées entre elles, pour garantir une utilisation à long terme de ces cellules, de manière sécurisée.

Pour cela un premier aspect de l'invention concerne un procédé de gestion de charge de cellules unitaires d'une pluralité de batteries connectées entre elles, la procédé comprenant les étapes consistant à :
- mesurer une tension aux bornes de chaque cellule unitaire de chacune de la pluralité de batteries,
- comparer les mesures de chaque cellule unitaire entre elles pour déterminer une tension la plus faible de toutes les cellules unitaires de la pluralité de batteries,
- équilibrer les tensions des cellules unitaires dont la tension est supérieure à la tension la plus faible, en prenant pour cible la tension la plus faible de sorte à réduire un écart entre la tension de chaque cellule unitaire et la tension la plus faible mesurée,
dans lequel l'étape consistant à équilibrer les tensions des cellules unitaires présentant une tension supérieure à la tension la plus faible est précédée par une étape consistant à déconnecter des autres batteries au moins une batterie comprenant une cellule unitaire dont la tension est à équilibrer.

Le procédé selon l'invention permet de limiter et d'homogénéiser le vieillissement des cellules unitaires composant chacune des batteries du système car le procédé d'équilibrage prend en considération les tensions de toutes les cellules unitaires du système de batterie, avant de forcer l'équilibrage de chaque cellule unitaire dont la tension est supérieure à la tension la plus faible. De plus, la sécurité de l'opération d'équilibrage est améliorée car au moins une batterie est isolée du système lors de l'opération d'équilibrage. Le procédé gère de manière globale l'équilibrage des tensions, quelque soit l'architecture globale du système de batteries, et ne présuppose pas de connaître cette architecture. La gestion est particulièrement simple à mettre en oeuvre dans le cas où on utilise des cellules unitaires électrochimiques standard équipées de dispositif d'équilibrage. Il suffit de les connecter entre elles en batteries (autrement appelées modules de cellules) et connecter ces batteries entre elles pour adapter la fourniture d'électricité au besoin.

Avantageusement, l'étape consistant à déconnecter des autres batteries au moins une batterie est une étape consistant à déconnecter des autres batteries chaque batterie comprenant une cellule unitaire dont la tension est à équilibrer. La sécurité est améliorée, car toutes les batteries avec une cellule unitaire à équilibrer sont isolées lors de l'équilibrage des tensions.

Avantageusement, l'étape de comparaison des mesures comprend une étape de transmission des mesures par chaque batterie à un module de supervision, le module de supervision effectuant l'étape de comparaison des mesures et opérant ensuite une étape consistant à envoyer la valeur de la tension la plus faible à chacune des batteries comprenant au moins une cellule unitaire avec une tension supérieure à la tension la plus faible. La gestion est centralisée, ce qui permet de simplifier l'architecture des batteries.

Avantageusement, l'étape de comparaison des mesures comprend une étape consistant à ce que chaque batterie transmette les mesures des tensions des ses cellules unitaires aux autres batteries de la pluralité de batteries, chaque batterie comparant ensuite les mesures reçues avec les tensions de ses cellules unitaires.

Avantageusement, l'étape d'équilibrage des tensions est une étape consistant à décharger toutes les cellules unitaires présentant une tension supérieure à la tension minimale, jusqu'à ce que toutes les cellules unitaires présentent une tension égale à la tension minimale. Un tel équilibrage passif est aisé et économique à mettre en place.

Avantageusement, l'étape de décharge est une étape consistant à faire passer du courant à travers une résistance branchée aux bornes de la cellule unitaire à décharger, via un commutateur. On comprend l'utilité de déconnecter une batterie dont une cellule est équilibrée selon cette mise en oeuvre : la température peut augmenter, ce qui pourrait affecter les caractéristiques des batteries voisines.

Avantageusement, la pluralité de batteries connectées comprend au moins deux batteries connectées en parallèle et/ou au moins deux batteries connectées en série.

Avantageusement, le procédé de gestion de charge de cellules unitaires est mis en oeuvre pour effectuer un équilibrage de charge de batteries d'un véhicule automobile.

Un second aspect de l'invention est un véhicule automobile comportant une pluralité de batteries connectées et comprenant chacune des cellules unitaires dont la charge est gérée avec le procédé de gestion de charge selon l'une des revendications précédentes.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

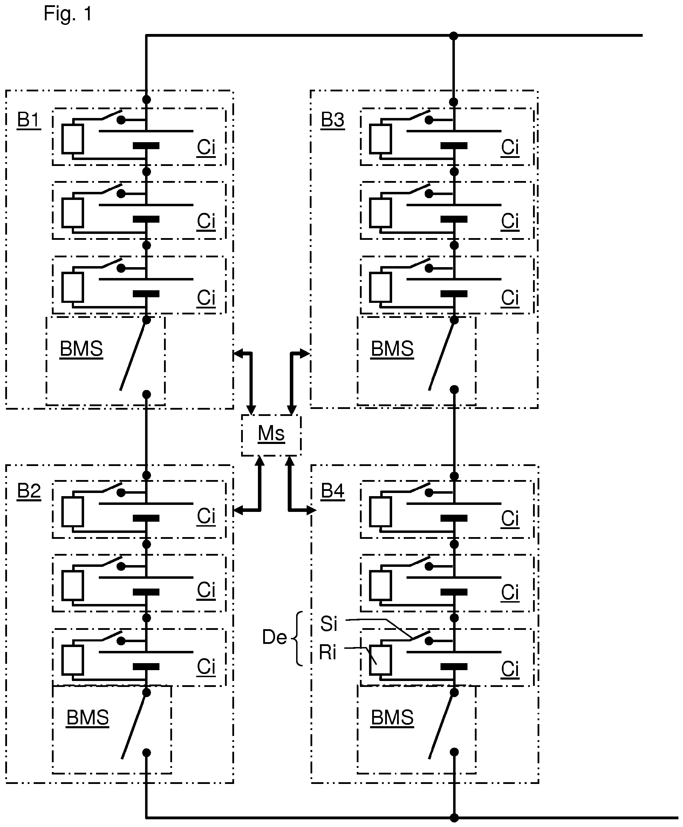

- la figure 1 représente un exemple de schéma électrique représentant une pluralité de batteries interconnectées entre elles, et dont la charge des cellules unitaires est gérée par le procédé selon l'invention.

Dans la présente demande, on entend par cellule unitaire une cellule électrochimique qui transforme de manière réversible de l'énergie chimique en énergie électrique. Une cellule unitaire peut être autrement appelée accumulateur. Une association de plusieurs cellules unitaires (ou accumulateurs) en série forme alors une batterie, autrement appelée module de cellules unitaires. Dans un système, électrique, il est connu d'associer les batteries soit en série ou en parallèle, pour augmenter respectivement la tension ou le courant maximal pouvant être délivré.

Dans un tel système, si une cellule unitaire présente une tension inférieure à la tension d'autres cellules unitaires, alors ces autres cellules peuvent être encore plus sollicitées, ce qui affecte leur durée de vie.

L'invention se propose de gérer la charge (ou la tension) des cellules unitaires du système pour préserver au mieux leur durée de vie.

La figure 1 représente un schéma électrique d'un système comprenant plusieurs batteries notées Bi, et en particulier quatre batteries B1 à B4. Les batteries B1 et B2, ainsi que B3 et B4 sont reliées en série, deux à deux. Les deux blocs de batteries reliées en série sont ensuite connectés en parallèle.

Toutes les batteries B1 à B4 sont chacune constituées de cellules unitaires Ci reliées en série. Chaque cellule unitaire Ci est une cellule électrochimique qui peut transformer de l'énergie électrique en énergie chimique et vice versa. Toutes les cellules unitaires Ci sont équipées de manière standard d'un dispositif d'équilibrage de charge De.

Dans le cas présent, le dispositif d'équilibrage de charge De (autrement appelé dispositif d'équilibrage de tension) comporte une résistance Ri et un commutateur Si reliés aux bornes de connexion de la cellule unitaire Ci. Si la tension de la cellule unitaire Ci est trop élevée, alors le commutateur Si est commandé pour qu'il se ferme et la cellule unitaire Ci se décharge au travers de la résistance Ri.

Le procédé selon l'invention a pour but de garantir qu'aucune cellule unitaire du système global ne soit un facteur limitant de fonctionnement pour les autres cellules unitaires Ci.

A cet effet, le procédé comporte une étape de mesure des tensions de chaque cellule unitaire Ci. Toutes ces tensions sont envoyées à un module de supervision Ms qui les compare entre elles pour déterminer la tension la plus faible.

Cette tension la plus faible est alors renvoyée comme tension cible à toutes les cellules unitaires Ci qui présentent une tension supérieure à la tension la plus faible, pour activer leur dispositif d'équilibrage De, afin de réduire la tension de ces cellules unitaires pour égaler la tension la plus faible. Ainsi, toues les cellules unitaires du système présente une tension égale et seront sollicitées de manière équivalente, ce qui augmente la durée de vie globale du système.

Bien entendu, on peut envisager de n'envoyer la consigne de décharge passive à une cellule unitaire Ci que si sa tension présente une différence prédéterminée avec la tension la plus faible.

Le procédé selon l'invention comporte également une étape consistant à déconnecter du système les batteries qui ont des cellules unitaires Ci dont la tension doit être équilibrée, avant de procéder à l'équilibrage, afin d'éviter tout risque de perturbation du système lors de cet équilibrage de tension.

A cet effet, chaque batterie Bi comprend un système de commande appelé BMS équipé d'un commutateur, représenté ouvert sur la figure 1 mais qui est fermé dès que le système doit fournir du courant.

Le procédé selon l'invention gère de manière globale l'équilibrage des tensions des cellules unitaires Ci, quelque soit le schéma de connexion des batteries B1 à B4. De plus, même si au niveau individuel de chaque batterie B1 à B4, les tensions des cellules unitaires Ci sont équilibrées, le procédé opère un équilibrage si entre les batteries B1 à B4, des cellules unitaires présentent des tensions différentes ou trop différentes, ce qui résulterait en des sollicitations déséquilibrées des batteries.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de gestion de charge de cellules unitaires (Ci) d'une pluralité de batteries (Bi) connectées entre elles, la procédé comprenant les étapes consistant à :
- mesurer une tension aux bornes de chaque cellule unitaire (Ci) de chacune de la pluralité de batteries (Bi),
- comparer les mesures de chaque cellule unitaire (Ci) entre elles pour déterminer une tension la plus faible de toutes les cellules unitaires (Ci) de la pluralité de batteries (Bi),
- équilibrer les tensions des cellules unitaires (Ci) dont la tension est supérieure à la tension la plus faible, en prenant pour cible la tension la plus faible de sorte à réduire un écart entre la tension de chaque cellule unitaire (Ci) et la tension la plus faible mesurée,
dans lequel l'étape consistant à équilibrer les tensions des cellules unitaires (Ci) présentant une tension supérieure à la tension la plus faible est précédée par une étape consistant à déconnecter des autres batteries (Bi) au moins une batterie (Bi) comprenant une cellule unitaire (Ci) dont la tension est à équilibrer.

2. Procédé de gestion de charge de cellules unitaires (Ci) selon la revendication précédente, dans lequel l'étape consistant à déconnecter des autres batteries (Bi) au moins une batterie (Bi) est une étape consistant à déconnecter des autres batteries (Bi) chaque batterie (Bi) comprenant une cellule unitaire (Ci) dont la tension est à équilibrer.

3. Procédé de gestion de charge de cellules unitaires (Ci) selon l'une des revendications précédentes, dans lequel l'étape de comparaison des mesures comprend une étape de transmission des mesures par chaque batterie (Bi) à un module de supervision (Ms), le module de supervision (Ms) effectuant l'étape de comparaison des mesures et opérant ensuite une étape consistant à envoyer la valeur de la tension la plus faible à chacune des batteries (Bi) comprenant au moins une cellule unitaire (Ci) avec une tension supérieure à la tension la plus faible.

4. Procédé de gestion de charge de cellules unitaires (Ci) selon l'une des revendications 1 ou 2, dans lequel dans lequel l'étape de comparaison des mesures comprend une étape consistant à ce que chaque batterie (Bi) transmette les mesures des tensions de ses cellules unitaires (Ci) aux autres batteries (Bi) de la pluralité de batteries (Bi), chaque batterie (Bi) comparant ensuite les mesures reçues avec les tensions de ses cellules unitaires (Ci).

5. Procédé de gestion de charge de cellules unitaires (Ci) selon l'une des revendications précédentes, dans lequel l'étape d'équilibrage des tensions est une étape consistant à décharger toutes les cellules unitaires (Ci) présentant une tension supérieure à la tension minimale, jusqu'à ce que toutes les cellules unitaires (Ci) présentent une tension égale à la tension minimale.

6. Procédé de gestion de charge de cellules unitaires (Ci) selon la revendication précédente, dans lequel l'étape de décharge est une étape consistant à faire passer du courant à travers une résistance (Ri) branchée aux bornes de la cellule unitaire (Ci) à décharger, via un commutateur (Si).

7. Procédé de gestion de charge de cellules unitaires (Ci) selon l'une des revendications précédentes, dans lequel la pluralité de batteries (Bi) connectées comprend au moins deux batteries (Bi) connectées en parallèle et/ou au moins deux batteries (Bi) connectées en série.

8. Procédé de gestion de charge de cellules unitaires (Ci) selon l'une des revendications précédentes, mis en oeuvre pour effectuer un équilibrage de charge de batteries (Bi) d'un véhicule automobile.

9. Véhicule automobile comportant une pluralité de batteries (Bi) connectées et comprenant chacune des cellules unitaires (Ci) agencées pour être chargées avec le procédé de gestion de charge selon l'une des revendications précédentes.

## Patentansprüche

1. Verfahren zur Ladungsverwaltung einzelner Zellen (Ci) einer Mehrzahl von Batterien (Bi), die miteinander verschaltet sind, wobei das Verfahren die Schritte aufweist, die aus Folgendem bestehen:
- Messen einer Spannung an den Klemmen jeder einzelnen Zelle (Ci) jeder der Mehrzahl von Batterien (Bi),
- Vergleichen der Messungen jeder einzelnen Zelle (Ci) untereinander, um eine schwächste Spannung aller einzelnen Zellen (Ci) der Mehrzahl von Batterien (Bi) zu bestimmen,
- Ausgleichen der Spannungen der einzelnen Zellen (Ci), deren Spannung größer ist als die schwächste Spannung, indem die schwächste Spannung derart als Ziel genommen wird, dass ein Unterschied zwischen der Spannung jeder einzelnen Zelle (Ci) und der gemessenen schwächsten Spannung reduziert wird,
wobei dem Schritt, der darin besteht, die Spannungen der einzelnen Zellen (Ci), die eine Spannung aufweisen, die größer ist als die schwächste Spannung, auszugleichen, ein Schritt vorangeht, der darin besteht, mindestens eine Batterie (Bi), die eine einzelne Zelle (Ci), deren Spannung auszugleichen ist, umfasst, von den anderen Batterien (Bi) abzustecken.

2. Verfahren zur Ladungsverwaltung einzelner Zellen (Ci) nach dem vorstehenden Anspruch, wobei der Schritt, der darin besteht, mindestens eine Batterie (Bi) von den anderen Batterien (Bi) abzustecken, ein Schritt ist, der darin besteht, jede Batterie (Bi), die eine einzelne Zelle (Ci), deren Spannung auszugleichen ist, umfasst, von den anderen Batterien (Bi) abzustecken.

3. Verfahren zur Ladungsverwaltung einzelner Zellen (Ci) nach einem der vorstehenden Ansprüche, wobei der Schritt des Vergleichens der Messungen einen Übertragungsschritt der Messungen durch jede Batterie (Bi) zu einem Überwachungsmodul (Ms) umfasst, wobei das Überwachungsmodul (Ms) den Vergleichsschritt der Messungen ausführt und anschließend einen Schritt umsetzt, der darin besteht, den Wert der schwächsten Spannung an jede der Batterien (Bi) zu senden, die mindestens eine einzelne Zelle (Ci) mit einer Spannung, die größer ist als die schwächste Spannung, umfasst.

4. Verfahren zur Ladungsverwaltung einzelner Zellen (Ci) nach einem der Ansprüche 1 oder 2, wobei der Vergleichsschritt der Messungen einen Schritt umfasst, der darin besteht, dass jede Batterie (Bi) die Messungen der Spannungen ihrer einzelnen Zellen (Ci) an die anderen Batterien (Bi) der Mehrzahl von Batterien (Bi) sendet, wobei jede Batterie (Bi) anschließend die empfangenen Messungen mit den Spannungen ihrer einzelnen Zellen (Ci) vergleicht.

5. Verfahren zur Ladungsverwaltung einzelner Zellen (Ci) nach einem der vorstehenden Ansprüche, wobei der Schritt des Ausgleichens der Spannungen ein Schritt ist, der darin besteht, alle einzelnen Zellen (Ci), die eine Spannung größer als die Mindestspannung aufweisen, zu entladen, bis alle einzelnen Zellen (Ci) eine Spannung gleich der Mindestspannung aufweisen.

6. Verfahren zur Ladungsverwaltung einzelner Zellen (Ci) nach dem vorstehenden Anspruch, wobei der Entladeschritt ein Schritt ist, der darin besteht, Strom durch einen Widerstand (Ri), der an die Klemmen der einzelnen Zelle (Ci), die zu entladen ist, angeschlossen ist, über einen Schalter (Si) durchgehen zu lassen.

7. Verfahren zur Ladungsverwaltung einzelner Zellen (Ci) nach einem der vorstehenden Ansprüche, wobei die Mehrzahl verbundener Batterien (Bi) mindestens zwei Batterien (Bi) umfasst, die parallel geschaltet sind, und/oder mindestens zwei Batterien (Bi), die in Serie geschaltet sind.

8. Verfahren zur Ladungsverwaltung einzelner Zellen (Ci) nach einem der vorstehenden Ansprüche, das umgesetzt wird, um ein Ladungsausgleichen von Batterien (Bi) eines Kraftfahrzeugs auszuführen.

9. Kraftfahrzeug, das eine Mehrzahl von Batterien (Bi) umfasst, die verbunden sind und jeweils einzelne Zellen (Ci) umfassen, die eingerichtet sind, um mit dem Ladungsverwaltungsverfahren nach einem der vorstehenden Ansprüche geladen zu werden.

## Claims

1. A method for charge management of unit cells (Ci) of a plurality of batteries (Bi) connected with one another, the method including the steps consisting of:
- measuring a voltage at the terminals of each unit cell (Ci) of each of the plurality of batteries (Bi),
- comparing the measurements of each unit cell (Ci) with one another to determine a lowest voltage of all the unit cells (Ci) of the plurality of batteries (Bi),
- equalizing the voltages of the unit cells (Ci), the voltage of which is greater than the lowest voltage, taking as a target the lowest voltage so as to reduce a deviatiom between the voltage of each unit cell (Ci) and the lowest measured voltage,
in which the step consisting of equalizing the voltages of the unit cells (Ci) having a voltage greater than the lowest voltage is preceded by a step consisting of disconnecting from the other batteries (Bi) at least one battery (Bi) including a unit cell (Ci), the voltage of which is to be equalized.

2. The method for charge management of unit cells (Ci) according to the preceding claim, in which the step consisting of disconnecting from the other batteries (Bi) at least one battery (Bi) is a step consisting of disconnecting from the other batteries (Bi) each battery (Bi) including a unit cell (Ci), the voltage of which is to be equalized.

3. The method for charge management of unit cells (Ci) according to one of the preceding claims, in which the step of comparison of the measurements includes a step of transmission of the measurements by each battery (Bi) to a supervision module (Ms), the supervision module (Ms) carrying out the step of comparison of the measurements and then operating a step consisting of sending the value of the lowest voltage to each of the batteries (Bi) including at least one unit cell (Ci) with a voltage greater than the lowest voltage.

4. The method for charge management of unit cells (Ci) according to one of Claims 1 or 2, in which the step of comparison of the measurements includes a step consisting in that each battery (Bi) transmits the measurements of the voltages of its unit cells (Ci) to the other batteries (Bi) of the plurality of batteries (Bi), each battery (Bi) then comparing the measurements received with the voltages of its unit cells (Ci).

5. The method for charge management of unit cells (Ci) according to one of the preceding claims, in which the step of equalizing of the voltages is a step consisting of discharging all the unit cells (Ci) having a voltage greater than the minimum voltage, until all the unit cells (Ci) have a voltage equal to the minimum voltage.

6. The method for charge management of unit cells (Ci) according to the preceding claim, in which the discharging step is a step consisting of passing current through a resistor (Ri) connected to the terminals of the unit cell (Ci) which is to be discharged, via a switch (Si).

7. The method for charge management of unit cells (Ci) according to one of the preceding claims, in which the plurality of connected batteries (Bi) includes at least two batteries (Bi) connected in parallel and/or at least two batteries (Bi) connected in series.

8. The method for charge management of unit cells (Ci) according to one of the preceding claims, implemented to carry out a charge equalization of batteries (Bi) of a motor vehicle.

9. A motor vehicle comprising a plurality of connected batteries (Bi) and each including unit cells (Ci) arranged to be charged with the charge management method according to one of the preceding claims.
